# EUROPEAN PATENT SPECIFICATION

(11) **EP 4 037 602 B1**
(45) Date of publication and mention of the grant of the patent: **04.09.2024**
(21) Application number: 20797883.4
(22) Date of filing: 29.09.2020
(51) Int. Cl.: A61C 5/00, A61C 5/20, A61C 1/08, A61C 13/08, A61C 13/09, A61C 13/087

(54) **THREE-LAYERED DENTAL PROSTHESIS**
DREISCHICHTIGE ZAHNPROTHESE
PROTHÈSE DENTAIRE À TROIS COUCHES

(30) Priority: 30.09.2019 IT 201900017585; 25.09.2020 IT 202000022735
(43) Date of publication of application: 10.08.2022
(73) Proprietor: Sposato, Luigi Salvatore, 87041 Acri (IT); Zuddio, Ferdinando, 87019 Spezzano Albanese (IT)
(72) Inventor: Sposato, Luigi Salvatore, 87041 Acri (IT); Zuddio, Ferdinando, 87019 Spezzano Albanese (IT)
(74) Representative: Perrotta, Aldo
(86) International application number: PCT/IT2020/050237
(87) International publication number: WO 2021/064759

(56) References cited:
- WO-A1-2019/087126
- US-A1- 2014 053 965
- US-A1- 2016 008 093

## Description

### Technical field of the invention

The subject of the present invention is a simplified three-layered dental covering prosthesis in PEEK or carbon fiber and composite resin, whose purpose is: to maintain the remaining natural teeth, to change the profile, to reposition the dental arches on a favourable dental class, the modification of the dental class, the aesthetics of the face and of the teeth, to allow the filling of the undercuts remaining in the PEEK or carbon fiber substructure, limiting eventual movements of the prosthesis during chewing and speech, occlusal elevation or that caused by chewing, together with an improvement of the patient's physical strength.

### State of the Art

As a result of occlusal stress, periodontal disease, caries, and the loss of teeth during lifetime, abrasions and fanning of the front teeth occur, with the loss of the vertical dimension. In these cases, the teeth are often mobile and tend to be lost.

The occlusal pre-contacts are the start of these pathologies, which, after years, lead to these consequences. One very important aspect is that of the decrease of the Vertical Occlusal Dimension (V.O.D. or V.D.) that determines, among other things, the shortening of the masticatory muscles. In order to express maximum physical strength we usually clench our teeth, increasing the blood pressure and the heart rate to increase the delivery of oxygen and sugars to the muscles involved in the effort (eustress or good stress), increasing muscle performance. If, for some reason, there is a decrease in the vertical dimension, with a shortening of the masticatory muscles, then the physical strength is also lacking.

It has been demonstrated that the stimulation of the trigeminal by the elongated neuro-muscular bundle has an excitatory action on the subject's vagus nerve, with important positive repercussions in the physical and mental relaxation systems. It follows that a shortening of the neuro-muscular bundle because of a loss of vertical dimension (V.D.) is associated with a decrease in the subject's relaxation, with an increase in negative stress or distress. It has also been demonstrated that the clinical tolerance of the neuro-articular system, with respect to the three-dimensional variability of the occlusion, is good in the increase of V.D. and in protrusion (it is the reason why faulty habits are often pro-choretic, i.e. to the front), while hardly tolerated in the dimension of V.D. and are not tolerated at all in the left and right laterals.

The repositioning of the vertical dimension, with the consequent increase in the vertical dimension, is obviously done often in complete prostheses, while, and the motive is not well understood, it is rarely or never done in partial, fixed prostheses, where it is usually preferred to prosthesize in the habitual or pro-choretic bite, with a reduced Vertical Dimension, tending to distress, and therefore to maintaining temporo-mandibular disorders (TMD) and thus bruxism, where present. Bruxism, that is the grinding of the teeth, is a physiological mechanism in relieving the stress accumulated during the day. By grinding during the night, the patient relieves stress. Not being able to grind the teeth increases cardio-vascular risk. All prostheses should, therefore, allow the patient the chance to grind. The increase in chewing, in any case, by decreasing distress during the day, can decrease the tendency to grind nocturnally. Another aspect to consider is that usually in prosthetics the loss of soft and hard tissues supporting the teeth is not considered. When it is necessary to put prostheses in the mouth, and therefore use as elements of a dental bridge, which, other than dental abrasion also has a lengthening of the clinical crown, the dentist's first step is the preparation of the tooth that is already worn, encapsulating it or with an increase in an articulator, most frequently without any clinical or diagnostic references.

If, in fact, we increase the bite, in a clinical or diagnostic reference, in these cases it would become difficult to give the tooth a normal, physiological length. To give an example, if the physiological length of a central incisor, easily deducible from its width thanks to the Laws of Fibonacci (Golden Dental Proportion), is 12 mm, and one has a loss to the length of the tooth of 3mm for abrasion, the prosthetic, with the filing and shrinking of the tooth should it be a bridge pillar, should not affect the occlusal surface in that the filing has already been done, so to speak, by the patient in the course of his lifetime. If, other than by abrasion, the tooth is also affected by a detachment, with a consequent rise of the clinical crown, let us suppose of 3 mm, if on one side in preparation we can give the tooth a more appropriate aspect with the Golden Dental Proportion (the prosthetic tooth would in fact be of 12 mm) on the other side we make a prosthesis with a bite lowered by 3mm, therefore causing masticatory and physical distress.

The most logical solution to raising the bite would therefore be, to create teeth with a length of 15mm (9mm of the residual tooth, 3mm of detachment and 3mm of wearing) that is not physiological and does not respond to the dictates of the Golden Dental Proportion. To remedy this, one would have to make, absurdly, some cervically inclined capsules, `gum pink' in colour, ugly and not physiological, because the lost supporting tissues cannot be added to the capsules where they would create frightening and absurd horizontal over-contours.

In these cases the fixed prosthesis, with the creation of the famous circular splints, is certainly a welcome solution to avoid the loss of the dental element, but it does not recreate the shape and the support to the perioral muscles that a good gum does, which can be had with dentures or with a "Toronto", that is by removing all the teeth and building a prosthesis on implants. When creating a fixed dental circular the dentist often struggles with these problems and, when the teeth are few, worn and/or mobile, he prefers to remove the residual dental elements, substituting them with implants and the creation of dentures screwed to implants that recreate the `pink aesthetics' (all on four or all on six) like the Toronto prosthesis. Sometimes it is also possible to leave the residual teeth under the prosthesis (over denture), with or without attachments to avoid the loss of the residual bone.

Another, very important, aspect to consider is the economic aspect.

Big, fixed, circular rehabilitations have a large cost, not affordable for the great majority of the population, who therefore turn towards partial, mobile prostheses or locks that have, as a following effect, the passage to either the total prosthesis or to a prosthesis on implants, also of the the all-on-four or all-on-six type. In mouths destroyed by periodontal disease, old, perhaps with few teeth, the tendency in the State of the Art is, in the vast majority of cases, as has already been stated, the removal of the dental elements and their substitution with fixed prostheses on implants (when the patient's finances permit this), or partial or total mobile prostheses.

For many reasons, not least of which medico-legal, whenever the maintenance of the dental element does not have systemic consequences for the patient, it is always better to save the teeth. This is particularly important in those patients who take bisphosphonates or anticancer drugs , with whom the conclusion has finally been arrived at, given the impossibility of keeping the teeth, to also save the roots, canalizing them and leaving them in place. Each case should be considered individually, always in the perspective that the average lifespan of the patient is about eighty years and that prosthetic makeovers, even extensive ones, should be redone every ten years,on average.

The increase in the vertical dimension, with the removal of the maxillary and mandibular bone bases, is possible with fixed circular prostheses and in total prostheses in edentulous cases, with and without implants. It is not possible to increase the vertical dimension in partial prostheses. The problem lies in the fact that the prostheses that manage to obtain an increase to the vertical dimension are very expensive. Only with a total prosthesis, in the completely edentulous patient, is a bite restored that is often aleatory, and made on the basis of clinical and/or instrumental methods.

The idea of covering a prosthesis, except for the orthotics in acrylic resin, was born in the USA around the year 2005 (Snap on smile), and is made of acetal resin and its purpose is to overcome the classical canons of prosthetics, that look more to the functional side of things, then to the aesthetic side.

Prostheses in PEEK have already been presented, which recreate the soft tissues, but they currently foresee stumping the residual teeth.

In Italy a prosthesis in PEEK has been presented without the filing of the teeth, that recreates also the soft tissue; it is held in the mouth by fastenings made of PEEK and by single dental splints that are also made of PEEK.

One example of a prosthesis that uses plastic fastening bands is given in DE102004029875A1. The document DE102004029875A1 describes a reticular adhesive band that is fixed to the dental arch of the fixed teeth, to which the prosthetic teeth are fixed. However, DE102004029875A1 does not make a prosthetic coating, but only fixes the anterior teeth and provides a support for the missing teeth.

US2014/053965 A1 describes a dental prosthesis for carrying out prosthetic restorative work, comprising a sub-structure and an over-structure, in which the sub-structure is made of PEEK and the over-structure that constitutes the aesthetic part is made of composite resin, covering the sub-structure in PEEK.

In order to fix it to the teeth, the dental prosthesis described in US 2014/053965 A1 must necessarily make use of fixing bands and splints, otherwise it could not be fixed to the patient's teeth, since to pass the undercuts of the teeth present, the sub-structure in PEEK must necessarily allow the passage of the remaining teeth in the patient's mouth.

### Description of the invention.

The invention is as defined in claim 1.

The new prosthesis, subject of the present invention, is a simplified new prosthesis, easy to make and to position with respect to those known so far to the State of the Art. The covering dental prosthesis for carrying out prosthetic works comprises two sub-structures and one over-structure, characterized by the fact that the first sub-structure is made of composite resin and adheres to the teeth, covering them, that said first sub-structure is covered by the second sub-structure made of PEEK or carbon fiber, and that the over-structure that constitutes the aesthetic part is made of composite resin covering the second sub-structure in PEEK or carbon fiber.

The composite resin external to PEEK or carbon fiber represents the aesthetic part and is made by the dental technician in the laboratory; the internal part in composite resin represents an effective contribution to the retentive phase of the prosthesis, itself already made of PEEK or carbon fiber, that are notoriously elastic in the right way, thanks to the possibility of filling the undercuts of the sub-structure in PEEK or carbon fiber and allowing the elimination of the splints and the bindings of PEEK. Polyether-ether-ketone (PEEK) is a colourless organic thermoplastic polymer in the polyaryl-ether-ketone family, used in engineering applications as a techno-polymer. PEEK is considered an advanced bio-material used in medical prostheses.

The physical characteristics of PEEK and its elasticity allow the creation of prostheses without the necessity of reducing the teeth to stumps, and therefore the teeth are not touched except for small adjustments to teeth that are too elongated or undercut. Analogous considerations can be made for carbon fiber. The sub-structure in composite resin adheres perfectly to the patient's teeth. All this allows the prosthesis to be held just as hooks do, surpassing the area of the tooth's equator. Furthermore, the PEEK or carbon fiber being less hard than the teeth, the prosthesis saves them from wear, the opposite of hooks, crystallizing their state at the moment of making the prosthesis itself. Within the temperature range of fusion, it can be processed by injection moulding or by methods of extrusion. PEEK or carbon fiber are, by their very nature, well adaptable to composites, they have similar characteristics to human bone and can easily be composite re-based, increasing the friction of the PEEK or carbon fiber on the teeth and therefore the retention of the prosthesis without any other auxiliaries.

Composite resins are constituted of two main components, namely a resin matrix and inorganic particles of filler (or reinforcer) incorporated in the resin itself. Considering the material with which this new prosthesis is created, we must also consider why it is necessary. This new type of prosthesis starts from the concept that, other than the teeth, the periodontium is also affected by aging, by illness, and by wear.

This new covering prosthesis in PEEK or carbon fiber and composite resin has been equipped with a further sub-structure in composite resin that is applied directly in the mouth. The composite attaches to the PEEK or the carbon fiber after having treated the PEEK or carbon fiber itself, preferably, but not exclusively, with commercial dental adhesives.

Such a prosthesis no longer needs attachments given that it is placed to act directly in the mouth in its entirety, or in separate parts, according to the case.

Where necessary, it is possible to splint the teeth momentarily with commercially available composite splints.

Once the prosthesis coated in PEEK or carbon fiber and composite resin has been applied, it will be the prosthesis itself that protects and splints the teeth.

Individual splints in PEEK will no longer be necessary.

In this way it is possible to create maintenance for the patient's teeth, applying covered prostheses that not only offer the prosthetic to the tooth, but that also recreate the supporting bone that may have been lost or that does not exist, as in the mild third dental classes where, by raising the bite, the patient can be returned to a dental class 1, with a notable functional and aesthetic improvement.

This new type of prosthesis gives the patient the possibility of not undergoing maxilla-facial surgery or to put off the operation; furthermore, it also has as a characteristic its relatively low cost and the possibility of being used at a future date as a provisional prosthesis for a new prosthesis on over-dentures and on implants. This prosthesis can be considered as a template that serves to give the dentist the idea of the correct positioning of eventual implants should teeth that are already mobile be lost, and to give the clinician an idea of the right vertical dimension and occlusion of the patient.

It is important to underline that in the patient's mouth, once conservation has been done, having removed the teeth that were to be removed and a hygienically elevated state of oral health has been created, nothing else is touched and it is therefore possible to return to the previous status quo without any damages.

Because of the particular structure of the prosthesis, which has a dental support along the perpendicular axis of the tooth and a mucous support on the edentulous saddles, no displacing or transversal forces are created, that could aggravate tooth mobility. Furthermore, once the prosthesis has been created, the professional can intervene directly in the clinic for small damages and to reline the edentulous parts, using composite resins. It is therefore a prosthesis which is also notably cost-effective in post-delivery management. The prosthesis does not alter, therefore, the patient's initial condition in any way, except for the rise in the vertical dimension, is economic, and can also be transformed into a classic total prosthesis. If the patient practises excellent oral hygiene, which he can do so by removing the prosthesis, there is no danger of worsening periodontal disease or giving rise to caries, which are, instead, often present in the skeletal prosthesis. In addition, gels and topical medicines can be conveyed using the same prosthesis like a spoon.

### Structure, laboratory procedures and functioning of the new dental prosthesis.

The new prosthesis is a covering prosthesis in PEEK or carbon fiber and composite resin with veneers, in part occlusal to the teeth and part pink aesthetic, in composite resin, that completely covers the teeth, reaching the first millimetres of the adherent gingiva. The prosthesis can be considered as a long-lasting provisional (5 years), pending further and definitive treatments. The prosthesis completely seals the underlying tissues, impeding the penetration by food. In such a prosthesis, the main aspect to consider is its size; in fact, the patient rarely willingly accepts his mouth being suddenly filled with dentures. The encumbrance is only one aspect of the problem, that often arises from the psychological non-acceptance of the prosthesis. Certainly, it is better if the prosthesis fixed on implants or on teeth is accepted, but if, for some reason, it is necessary to use a denture, in the end the problem of encumbrance must necessarily be faced.

The fact that complete prostheses on an implant of the Toronto type must, necessarily, start from the creation of a denture that would in any case be an encumbrance and with its own mobility must also be emphasized.

If, on the one hand, constructing the new type of prosthesis in PEEK or carbon fiber and composite resin would foresee the problem of encumbrance, on the other, it would however be possible to repair all those alterations of the gnathological type and of dental class that are often the cause, if not treated well during infancy and youth, of all those problems previously analyzed, correcting on the aesthetic level, for example, a second class dental condition to first class, or returning to first class a third class case without the need for maxilla-facial surgery. This type of prosthesis could also be better supported by less wealthy patients, who are the vast majority, and would fill the gap, until now unfilled, between a fixed prosthesis on the teeth and/or implant, and mobile partial and total prostheses, on implants and non, giving the dentist another arm to use when necessary.

### Benefits/advantages of the new dental prosthesis in Peek or carbon fiber and composite resin.

The new three-layered dental prosthesis in PEEK or carbon fiber and composite resin makes use of a more simplified and modern prosthetic protocol, applicable to the new digital dental technologies. In addition to restoring the centric and vertical dimension, where needed it manages to restore to the patient with aged teeth a youthful aesthetic, at low cost compared to traditional fixed prostheses, and at an even lower cost and in a faster time than previous prostheses in PEEK. The first sub-structure in composite resin, whose installation is carried out directly in the patient's mouth by the dentist, allows an easier procedure for the fitting the prosthesis in place, and guarantees the filling of the undercuts of the structure in PEEK or carbon fiber, guaranteeing a greater stability of the prosthesis itself. Thanks to its characteristics, the structure in PEEK or carbon fiber and composite resin is able to offer the patient a degree of comfort that is not achieved with other methods, and furthermore is easily repairable in the clinic by the dentist himself.

This prosthesis can also be kept, awaiting the time for the osseointegration of the implants, until such time as a definitive prosthesis is made, if the patient wants to do so. In this case the prosthesis according to the invention will transform into a Toronto type prosthesis, with acceptable and even more contained costs, without upsetting the patient's habits or aesthetics.

The prosthesis will be maintained both during avulsions, which can be done gradually, and during the implant phase. In this way, avulsions and implantology can be planned without the necessity of many sittings, which cause the patient a great deal of surgical stress and sometimes cannot be carried out in an out-of-hospital setting.

Finally, this prosthesis will be visible on CT scans, using metal parts of known size that the dentist will apply in strategic parts within the direct sub-structure in composite resin, making these parts visible to the CT scan and useful as precise markers for the virtual application of the implants. If so desired, the same prosthesis can easily be transformed into a template by making calibrated holes in it at the desired points, and which can be easily closed after the implant has been installed. In the future, therefore, it will be a valid aid to all dentists, who will be able to make whole implants safely, expanding the number of dentists who practise complex cases of implantology.

## Claims

1. A three-layered dental prosthesis for carrying out prosthetic restoration work, comprising two sub-structures and one over-structure, **characterized by** the fact that a first sub-structure is made of composite resin and is adapted to adhere to the teeth,
covering them, that said first sub-structure is covered by a second sub-structure made of PEEK or carbon fiber and that the over-structure that constitutes the aesthetic part is made of composite resin, covering the second sub-structure of PEEK or carbon fiber.

## Patentansprüche

1. Eine dreischichtige Zahnprothese zur Durchführung prothetischer Restaurationsarbeiten, bestehend aus zwei Unterstrukturen und einer Überstruktur, **dadurch gekennzeichnet,**
**dass** eine erste Unterstruktur aus Kompositharz besteht und so angepasst ist, dass sie an den Zähnen haftet und diese bedeckt, dass die erste Unterstruktur von einer zweiten Unterstruktur aus PEEK oder Kohlefaser bedeckt ist und dass die Überstruktur, die den ästhetischen Teil bildet, aus Kompositharz besteht und die zweite Unterstruktur aus PEEK oder Kohlefaser bedeckt.

## Revendications

1. Prothèse dentaire à trois couches pour la réalisation de travaux de restauration prothétique, comprenant deux sous-structures et une surstructure, **caractérisée par le fait qu'**une première sous-structure est en résine composite et est adaptée pour adhérer aux dents en les recouvrant, que ladite première sous-structure est recouverte par une deuxième sous-structure en PEEK ou en fibre de carbone et que la surstructure qui constitue la partie esthétique est réalisée en résine composite, recouvrant la deuxième sous-structure en PEEK ou fibre de carbone.
